(19) Europäisches Patentamt / European Patent Office / Office européen des brevets

(11) **EP 3 886 568 B1**

(12) **EUROPEAN PATENT SPECIFICATION**

(45) Date of publication and mention
of the grant of the patent:
**14.05.2025 Bulletin 2025/20**

(21) Application number: **19816848.6**

(22) Date of filing: **27.11.2019**

(51) International Patent Classification (IPC):
*A01G 13/06* *(2006.01)*

(52) Cooperative Patent Classification (CPC):
**A01G 13/065; A01G 13/06**

(86) International application number:
**PCT/GB2019/053343**

(87) International publication number:
**WO 2020/109782 (04.06.2020 Gazette 2020/23)**

(54) **APPARATUS FOR THE GENERATION AND DISTRIBUTION OF A FOG CONTAINING USEFUL THERMAL ENERGY**

VORRICHTUNG ZUR ERZEUGUNG UND VERTEILUNG EINES NEBELS MIT NÜTZLICHER WÄRMEENERGIE

APPAREIL POUR LA GÉNÉRATION ET LA DISTRIBUTION D'UN BROUILLARD CONTENANT UNE ÉNERGIE THERMIQUE UTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2018 GB 201819269**

(43) Date of publication of application:
**06.10.2021 Bulletin 2021/40**

(73) Proprietor: **Danil de Namor, Angela**
**Surrey GU2 7ST (GB)**

(72) Inventor: **Namor, Melhem**
**Surrey GU2 7ST (GB)**

(74) Representative: **Petty, Catrin Helen et al**
**Venner Shipley LLP**
**St James's**
**79 Oxford Street**
**Manchester M1 6EG (GB)**

(56) References cited:
**GB-A- 2 387 308        US-A- 2 154 002**
**US-A- 2 902 990        US-A- 3 244 641**
**US-A- 3 788 547**

EP 3 886 568 B1

**Description**

This invention relates to an apparatus for the generation and distribution of a fog containing useful thermal energy, and for then utilising such fog to protect plants against frost damage or the threat of frost damage.

**BACKGROUND OF THE INVENTION**

The applicant's earlier patent application, published as GB2387308, described the background state of the art at that time, and also a newly developed portable device in which steam is generated by burning a fuel, and that generated steam is then subsequently mixed with the still-hot combustion gases and with ambient air, in desired proportions, to create a vapour mixture which can be dispersed in a plantation as a protective thermal fog to reduce potential frost damage.

The purpose of that thermal fog is to act as a heat carrier and to transfer combustion heat from the fuel to the plantation, and secondly to act as an insulating blanket or barrier, to reduce radiative heat loss from the plantation, especially at night when temperatures typically fall. In this way more of the solar heat energy previously absorbed during daytime can be usefully retained in the plantation.

It is however still the case that the two most commonly used and popular systems to protect against frost damage are those that use water sprinklers and those that use a distributed system of open fuel burners. Water sprinklers are used with the principal objective of maintaining the presence of liquid water even while ice forms at 0°C, since frost damage due to freezing plant sap is not normally expected until the temperature has dropped to about -0.5°C. However, the sprinkler approach requires substantial investment in equipment as well as copious water consumption, which ultimately washes away into surface and underground aquifers. Furthermore, because it relies on the continuous formation of new ice on the plants once the temperature has fallen to freezing point (0°C), there is a risk of overburdening and damaging the plants with the weight of ice formed.

The open fuel burners are used as local heaters to combat the falling air temperature.

However, this system is very inefficient in its use of fuel and combustion heat, most of which is lost by convection to the upper air. In attempts to overcome this heat loss by blowing the combustion gases directly into the plantation space, there is a serious risk of very high temperature gas scorching the plants.

US 3,788,547 A discloses a spraying apparatus in which a liquid to be sprayed is atomized by combustion gases discharged from a combustion chamber in a pulsating stream.

The present invention arose from the inventors work in the use of a thermal fog as a protection against frost damage, and seeks to improve upon the prior art.

**SUMMARY OF THE INVENTION**

The invention is defined by the independent claim.

In accordance with one aspect, there is provided an apparatus according to claim 1.

The apparatus may further comprise a fuel tank configured to hold a fuel therein.

Preferably, the fuel is a liquid fuel. Preferably, the fuel tank is fluidly connected to the burner. Preferably, the apparatus comprises feed means for feeding fuel from the fuel tank to the burner. The feed means may comprise a pump.

Preferably, the apparatus comprises means for feeding the combustion gas along the enclosed conduit.

The means for feeding the combustion gas along the enclosed conduit may comprise a first blower. The first blower may be configured to feed the combustion gas from the burner into the enclosed conduit. The first blower may be disposed upstream of the burner and configured to feed atmospheric air into the burner.

Alternatively, or additionally, the means for feeding the combustion gas along the enclosed conduit may comprise a second blower. The second blower may be configured to feed the gas comprising water vapour from the enclosed conduit to the ejector. Accordingly, second blower may be disposed between the enclosed conduit and the ejector.

It may be appreciated that a blower may be an air pump.

A first, upstream portion of the enclosed conduit may define a combustion chamber.

A first, upstream portion of the enclosed conduit may be disposed substantially adjacent to a second, downstream portion of the enclosed conduit. Preferably, the second, downstream portion of the enclosed conduit is disposed substantially around the first, upstream portion of the enclosed conduit. Accordingly, the first, upstream portion and second, downstream portion of the enclosed conduit may share a dividing wall.

The first, upstream portion of the enclosed conduit may have a cylindrical cross-section. The second, downstream portion of the enclosed conduit may comprise an annulus disposed around and on the same longitudinal axis as first, upstream portion of the enclosed conduit.

The second, downstream portion of the enclosed conduit may comprise a plurality of passages. Each of the plurality of passages may substantially extend between distal and proximal ends of the first upstream portion. Accordingly, the second, downstream portion of the enclosed conduit may comprise at least 2, at least 3, at least **4,** at least 5, at least 6, at least 7 or at least 8 passages. Advantageously, the plurality of passages increases the length of the enclosed conduit.

A first passage may comprise a first end which is fluidly connected to the first upstream portion and a second end which is fluidly connected to a second passage which is downstream thereof. A final passage may comprise a first end which is fluidly connected to a preceding, upstream passage and a second end which is fluidly connected to an outlet conduit. Intermediate passages may each comprise a first end which is fluidly connected to a preceding, upstream passage and a second end which is fluidly connected to a downstream passage.

The apparatus may comprise an insulator. The insulator may be disposed substantially adjacent to the extended conduit. The insulator may be disposed over or substantially around the extended conduit. In embodiments where the second, downstream portion of the enclosed conduit is disposed substantially around the first, upstream portion of the enclosed conduit, the insulator may be disposed substantially adjacent to the second, downstream portion of the enclosed conduit. The insulator may be disposed over or substantially around the second, downstream portion of the enclosed conduit.

The outlet conduit may extend between the enclosed conduit and the ejector. The second blower may be disposed on the outlet conduit.

The outlet conduit may comprise an air inlet configured to allow ambient air to be drawn into the outlet conduit. The outlet conduit may comprise a valve. The valve may be configured to allow a user to control whether or not ambient air is drawn into the outlet conduit.

Preferably, the plurality of injectors are disposed along an external surface of the enclosed conduit. The plurality of injectors may be disposed along the second, downstream portion of the enclosed conduit. Accordingly, the plurality of injectors may be disposed along an external surface of the second, downstream portion of the enclosed conduit. The plurality of injectors may comprise a plurality of spray nozzles.

Preferably, the apparatus comprises a water tank. Preferably, the apparatus comprises one or more conduits which extend between the water tank and the plurality of injectors. Preferably, the apparatus comprises a pump configured to feed water from the water tank to the plurality of injectors.

The apparatus may comprise a water filter. Preferably, the water filter is disposed between the pump and the water tank.

The apparatus may comprise a power source. The power source may comprise a generator or a battery. The power source may be configured to power the first blower. The power source may be configured to power the second blower. The power source may be configured to power the pump.

The apparatus may comprise a plurality of ejectors. The plurality of ejectors may comprise at least two, at least three or at least four ejectors. In embodiments where the apparatus comprises at least two ejectors preferably at least one ejector is configured to release the gas comprising water vapour as a jet on a first side of the apparatus and at least one ejector is configured to release the gas comprising water vapour as a jet on a second side of the apparatus, wherein the second side is substantially opposite to the first side. As explained above, in some embodiments, the jet has a range of 40m. Accordingly, with a jet disposed on each side, the apparatus may be used to treat an area which is 80 m wide.

Preferably, the apparatus comprises at least four ejectors, wherein at least two ejectors are configured to release the gas comprising water vapour as a jet on a first side of the apparatus and at least two ejectors are configured to release the gas comprising water vapour as a jet on a second side of the apparatus, wherein the second side is opposite to the first side. Preferably, an ejector on each side of the apparatus is configured to release the gas comprising water vapour as a jet in a proximal direction. Preferably, an ejector on each side of the apparatus is configured to release the gas comprising water vapour as a jet in a distal direction.

Preferably, the direction of the or each ejector is adjustable. Accordingly, it may be possible to adjust the direction of a jet produced by the ejector. The direction of the jet may be adjustable in a horizontal plane. Alternatively, or additionally, the direction of the jet may be adjustable in a vertical plane. In a preferred embodiment, the direction of the jet is adjustable in both a horizontal plane and a vertical plane.

The apparatus may comprise a valve configured to selectively release a fluid from the enclosed conduit. Advantageously, this allows the release of water from enclosed conduit after the apparatus has been used.

In accordance with another aspect, there is provided a vehicle comprising the apparatus of the invention.

The vehicle may comprise a wheeled vehicle. The vehicle may comprise a trailer or a motorised vehicle. The trailer may comprise a connector configured to attach the trailer to a motorised vehicle.

All of the features described herein (including any accompanying claims, abstract and drawings), may be combined within the scope of the invention limited by the appended claims.

**BRIEF DESCRIPTION OF THE DRAWINGS**

Embodiments of the invention are illustrated by way of example in the accompanying drawings, in which:

**Figure 1** is a perspective view of an apparatus in accordance with the invention mounted on a vehicle;
**Figure 2** is a sectional view of the apparatus of Figure, substantially adjacent to a proximal end thereof;
**Figure 3** is a sectional view of a water injection nozzle;
**Figure 4** is a schematic diagram of passages which form a component part of the apparatus of Figure 1;

and

**Figure 5** is an aerial view of the apparatus of Figure 1 in use in a plantation.

## DETAILED DESCRIPTION OF THE INVENTION

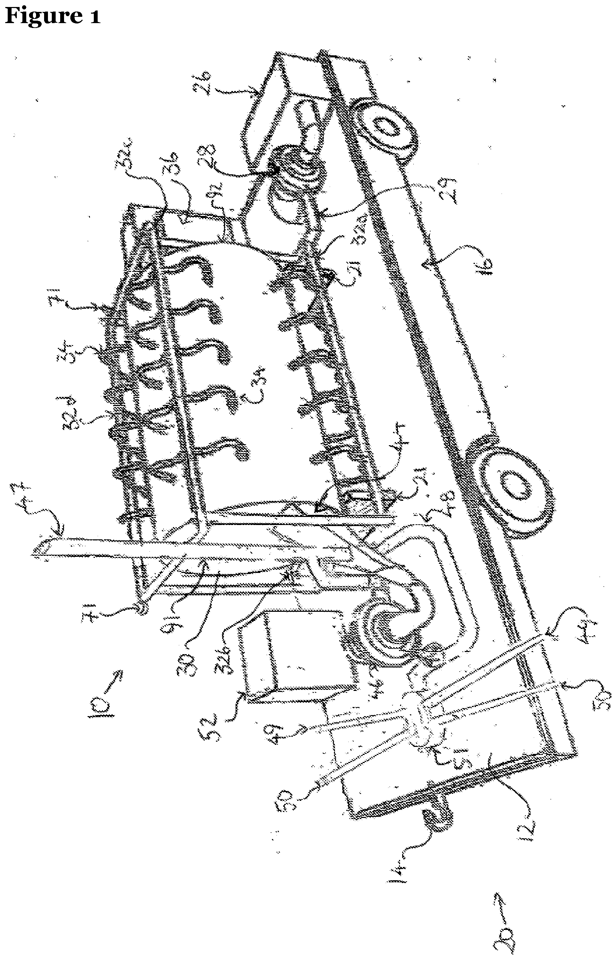

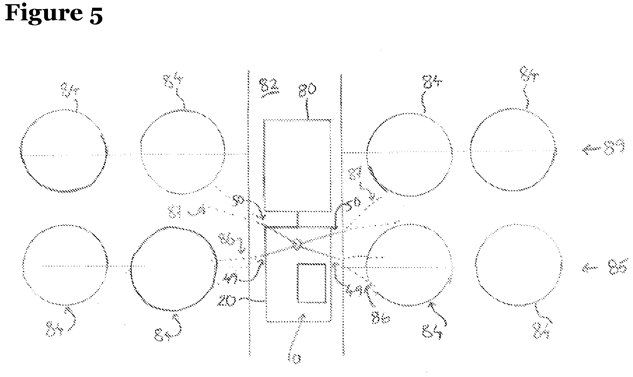

In Figure 1 of the drawings, thermal fog generating apparatus 10 is shown standing on a platform 12 carried on a wheeled vehicle 20. In Figure 1, the wheeled vehicle is a trailer provided with a coupling 14 by which it can be drawn behind a tractor 80, as shown in Figure 5.

The apparatus 10 includes an evaporator unit 30 and a distribution system. As explained in more detail below, the evaporator unit 30 is configured to heat, evaporate and cool water. The distribution system is configured to release the fluid from the apparatus from ejection units 49, 50, which are pivotally mounted on support 51, to generate a thermal fog.

The evaporator unit 30 is in the shape of a cylinder with a proximal end 91 and a distal end 92, and is securely supported over the platform 12 by front and rear cradle blocks 21. The cradle blocks 21 space the evaporator unit 30 apart from the platform 12 to prevent overheating. The evaporator unit 30 has a tap (not shown) disposed in a lower part thereof to allow evacuation of water after work has been completed.

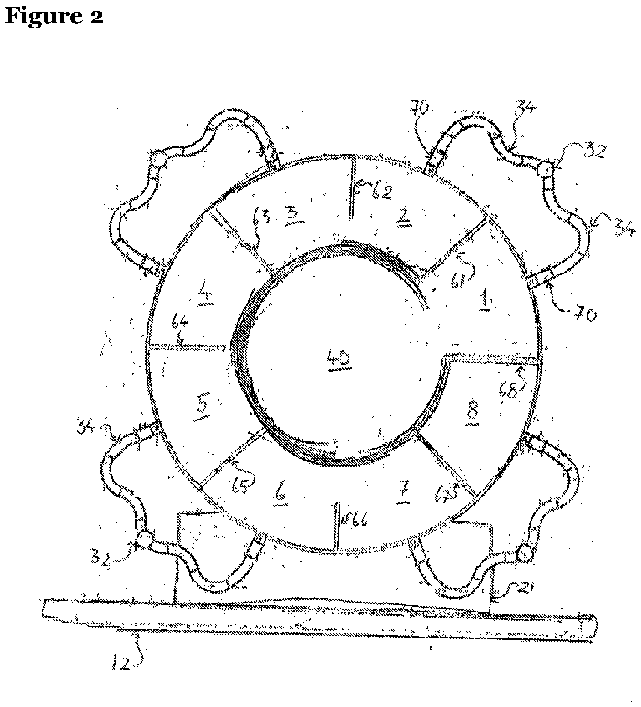

As shown in Figure 2, the evaporator unit 30 comprises a combustion chamber 40, which is located centrally therein, and is surrounded by a eight interconnected passages 1-8 which extend parallel to each other, in an axial direction, substantially between the proximal and distal ends 91, 92 of the evaporator unit 30. The combustion chamber 40 defines an aperture 58 substantially adjacent to the proximal end 91 of the evaporator unit 30, which fluidly connects the chamber 40 with a first passage 1.

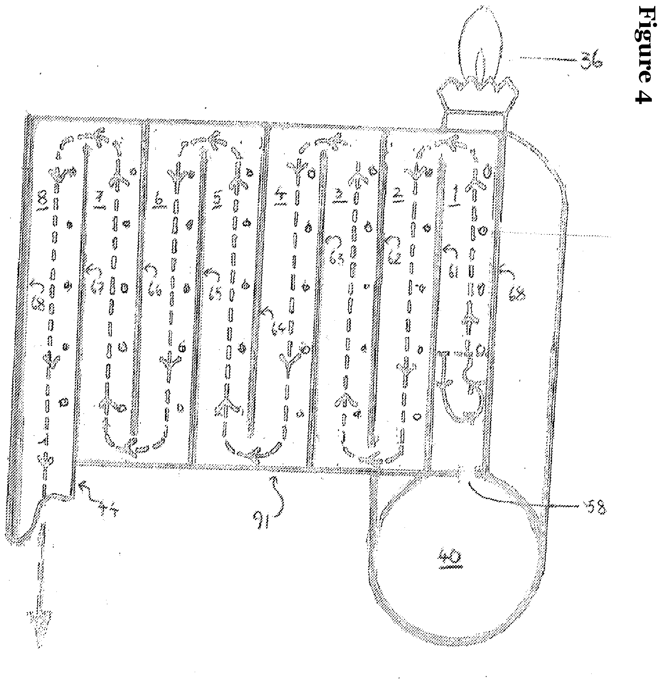

Figure 4 shows a simplified view of the passages 1-8. For clarity, the passages 1-8 have been shown in a planar configuration. However, it will be appreciated that in the apparatus the passages will extend around the cylindrical combustion chamber 40. As shown in Figure 4, the first passage 1 is disposed adjacent to a second passage 2 and a first wall 61 is disposed therebetween. An aperture in the first wall 61 is provided substantially adjacent to the distal end 92 of the combustion chamber 40, fluidly connecting the first and second passages 1, 2. Similarly, the second passage 2 is disposed adjacent to a third passage 3 and a second wall 62 is disposed therebetween. An aperture in the second wall 62 is provided substantially adjacent to the proximal end 91 of the combustion chamber 40, fluidly connecting the second and third passages 1, 3. This pattern continues for the remaining passages 3-8, with the apertures in the separating walls 63-67 alternating between being disposed substantially adjacent to the proximal end 91 or the distal end 92 of the evaporator unit 30. As shown in Figure 2, the eighth passage 8 is disposed adjacent to the first passage 1, with an eighth wall 68 disposed therebetween. No aperture is provided in the eighth wall.

An outlet conduit 44 is provided on the proximal end 91 of the evaporator unit 30 and is fluidly connected to the eighth passage 8. The outlet conduit 44 comprises a valve (not shown). When the valve is closed, a gas flowing from the passages 1-8 flows to a blower 46 with adjustable performance. The blower 46 is configured to cause the gas to then travel along a conduit 48 to the ejectors 49 and 50. Support 51 is a radially graduated circular scale fixed to the platform 12 with a centre pivot in which the two ejectors 49 and 50 are rotably fixed, allowing a user to vary how a fog ejected from ejectors 49, 50 is distributed.

Alternatively, when the valve is open, atmospheric air may be drawn down conduit 47 and become entrained in the warm gas. This allows the gas to be further cooled, if necessary, prior to being ejected.

A water tank 16 is suspended under platform 12. A pipe (not shown) extends between the water tank 16 to a water filter 26, which is mounted on the rear of platform 12. Water is drawn from the tank 16 and through the water filter 26 by a water pump 28. A further conduit 29 extends between the filter 26 and four water distribution pipes 32a-d. The distribution pipes 32a-d extend substantially parallel to the evaporator unit 30 with one pipe 32a disposed on a lower left side of the evaporator unit 30, one pipe 32b on a lower right side of the evaporator unit 30, one pipe 32c on an upper left of the evaporator unit and one pipe 32d on an upper right sides of the evaporator unit 30. Five pairs of inlet conduits 34 are provided on each distribution pipe 32a-d. The inlet conduits deliver the filtered water to injector nozzles 70, which intern inject it into the passages 1-8. Accordingly, each distribution pipe 32a-d is configured to supply two of the passages 1-8 with water at five separate points along the length of the passage 1-8.

Accordingly, each of the passages 1 to 8 is provided with five nozzles configured to deliver the same quantity of water at the same pressure.

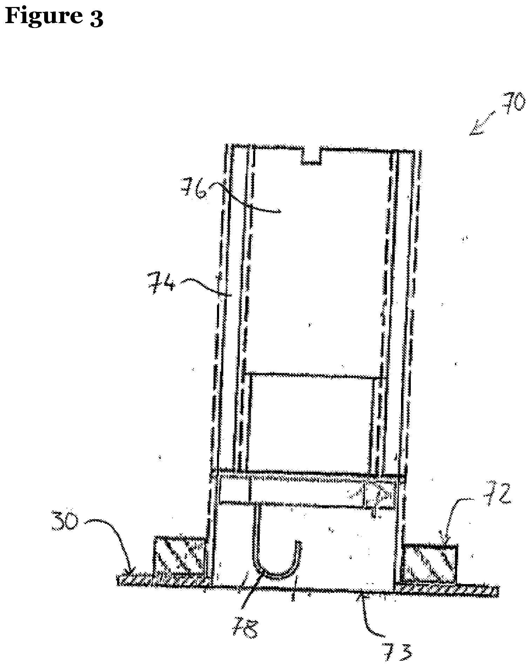

An injector nozzle 70 is shown in more detail in Figure 3. As shown in the Figure, a mounting ring 72 is welded to an external surface of the combustion chamber 40. The mounting ring 72 is disposed around an aperture 73 in the external surface of the combustion chamber 40. The injector nozzle 70 is reversibly attached to the welded mounting ring 72. The injector nozzle 70 comprises a hollow injector shell 74, which is reversibly coupled directly to the mounting ring 72. A mounted injector body 76 is disposed, in double threaded engagement, inside the hollow injector shell 74. This arrangement allows the spray only, and not the metal 78, to be in contact with the passing gases. Furthermore, the nozzle 70 is readily accessible for maintenance, inspection and service requirements.

A burner 36 is disposed on the rear of platform 12. The burner is configured to receive liquefied fuel from fuel tank, which is also mounted on the rear of the platform 12. In the burner 36, the fuel is mixed with an excess of atmospheric air, ignited, and injected into the combustion chamber 40. The excess of air, which is provided by an air blower (not shown) optimises the combustion of the fuel.

The apparatus 10 further comprises an electrical power supply 52 disposed towards the front of platform 12. The electrical power supply 52 produces electrical power to power the pump 28 and the blower 46. In an alternative embodiment, the electrical generator 52 can be replaced by the electrical power produced by an independent electrical generator powered by the PTO of the tractor. The electrical system should be provided with the adequate security controls.

In use, the evaporator unit 30 is covered by a thick insulator filled curtain (not shown), which hangs on frame hooks 71 disposed on the upper distribution pipes 32c, 32d. The curtain isolates the evaporator unit, preventing loss of heat and protecting the operator.

When a user wishes to use the apparatus 10, they would activate the electrical generator 52 to power the pump 28 and the blower 46. The user would then first feed the liquefied fuel and air to the burner 36 and ignite the fuel. As explained above, excess air will be provided, and the proportion which could be up to 50% excess of the stoichiometric requirement of the fuel to obtain maximum efficiency.

The ignited fuel and air in the burner 36 is injected into the combustion chamber 40 where it continues to combust as it travels along the length of the chamber 40 to the proximal end 91. The combustion gases then travel from the combustion chamber 40, through the aperture 58 and enter the first passage 1. The combustion gases travel along the first passage 1 until they reach the distal end 92 of the evaporator unit 30. At this point, the combustion gases pass through the aperture in the first wall 61 into the second passage 2. The combustion gases continue to travel through the passages 1-8 until they reach the eighth passage 8. The gases then flow along the outlet conduit 44, to the blower 46 and along the conduit 48 to the ejectors 49 and 50 where it is released into the atmosphere.

Due to the action of pump 28, water is drawn from the water tank 16, through the filter 26, along the conduit 29, along the distribution pipes 32a-d, along the inlet conduits 34, which will discharge it into the passages 1-8 via the nozzles 70. Due to the delivery of the water, the temperature of the combustion gases in the passages 1-8 is reduced gradually from a starting temperature of about 900°C to about 100°C. This is caused by the evaporation of the injected water, forming water vapour in a superheated state. The gas becomes saturated at 100°C. The volume ratio of liquid water to liquefied fuel used by the apparatus running under steady conditions is normally exactly linked stoichiometrically in such a way that the total water to be evaporated will be supplied with the exact amount of fuel necessary for that evaporation.

The saturated gas then flows along the outlet conduit 44, to the blower 46, along the conduit 48 and out of the ejectors 49 and 50. Once the gas is ejected it contacts atmospheric air at low temperatures and condenses rapidly onto nearby plants, transferring the condensation heat by conduction to the plant. The gas remaining in the air delivers the condensation heat to the local atmosphere.

Figure 5 illustrates the apparatus 10 in action for protecting a plantation against frost. The most common type of plantation where the invention will be used may contain deciduous fruit trees, such as apple tree, pear trees or stone fruit trees, or in a vineyard. Accordingly, the apparatus may be used in temperate areas prone to frost in springtime. However, it may be appreciated that frost can also affect subtropical plantations, which may contain citrus trees, and sometimes even tropical plantations, which may contain coffee plants. The apparatus 10 may be used in all of these plantations. It will be noted that a general feature of such plantations is that they are commonly arranged in rows at convenient separation or space for agricultural machinery to work comfortably within the rows, as shown in Figure 5.

Figure 5 shows the wheeled vehicle 20 carrying the apparatus 10 is coupled to, a tractor 80. The tractor 80 draws the apparatus 10 along a track 82 through an orchard containing lines of fruit trees 84 extending at right angles to the track on both sides thereof. The ejectors 49, 50 are producing jets 86, 87 as described above which will penetrate not only deeply along the rows but also into the spaces therebetween. Accordingly, the paired jets 86, 87 on each side of the apparatus 10 will wet significant area of the trees 84 as the tractor moves forward. The speed which the tractor moves at will a large effect on the quantity of the thermal fog that contacts each tree 84.

To obtain maximum coverage, if the apparatus is disposed next to a first row of trees 85, then the forward pointing ejectors 49 will ideally be positioned to direct the jet 86 along a second row of trees 89 directly in front of the first row 85. As the tractor 50 moves forward the jet 86 will contact trees 84 that are closer to the track 82, contacting each tree 84 in turn. The backwards pointing ejectors 50 may be similarly configured.

At the impact area on the tree trunk the thermal fog will produce a mass of vapour and gases which will scatter into the plant canopy in all directions. These scattered waves of warm gases and vapour can be optimized by channelling them with small baffles conveniently attached to the tree trunk at the impact area.

Furthermore, part of the uncondensed jet may ascend by convection to an elevated level in the atmosphere above the plantation and, cooling as it rises, may form a thermal fog barrier which acts as a blanket over the plantation. Thus, the thermal fog can act to both add and retain heat, as both carrier and barrier.

The specific embodiment of the invention that has been described and illustrated in the accompanying drawings can be readily set up and prepared for use by one person in a very short time. It is usually only necessary to fill the water tank 16, to ensure that there is sufficient fuel in the fuel tank for the burner 36, to ensure that the electrical power supply 52 is fully charged, and to couple the trailer 20 to the tractor 80. In this way, the thermal protection of a plantation can be commenced in a very short time after a frost warning is received.

It may be appreciated that the total surface area to be treated against the threat of frost is essentially a function with the following variables:

SA(TF)= Surface area to be treated
$d_f$ = dose of combustion fuel to be burned for combustion
$d_w$ = dose/quantity of water to be evaporated
$p_s$ = water suction capacity of pump 26
$p_e$ = blowing power of blower 46

such that

$$SA(TF) = f\,(d_f + d_w * p_s + p_e)$$

Furthermore, the pump 28 should have a power capacity to maintain a working pressure such that it is able to eject the gas from the ejectors 49, 50 at an adequate speed. For instance, the gas may be ejected at a pressure of about 1 atmosphere.

The correct quantity of water may also be calculated to ensure that the gas which is ejected has a final temperature of about 100°C. The blower 46 should also have a suction capacity capable of maintaining a working pressure equal or slightly lower than the pressure in the evaporator unit 30.

For calculating the thermal fog production regime in $m^2$/Ha it is necessary, in principle if not in practice, to know the chemical composition of the fuel to be used and the stoichiometric quantity of oxygen to be taken from air for achieving perfect chemical combustion. The stoichiometric mass of air needed to combust the fuel may be calculated, and an excess of air may then be added. Generally an excess of about 50% is used to obtain optimal combustion. The total volume of the air and combustion gases can then be calculated. To this volume, the volume of water vapour which will be produced can be added. The volume of water vapour will be in the order of 1700 litres of water vapour per litre of water evaporated under atmospheric pressure and at 100°C. In this way the total volume of gas to be suctioned and ejected by the blower 46 can be determined.

The basic components resulting from this combustion will be carbon dioxide and water, with the fog produced resembling a natural fog.

The invention can use liquid fuels for industrial use or heating in accordance with existing regulations for conventional agro-production. However, in a preferred embodiment, but a clean fuel or biofuel, free of heavy metals or acid contaminants, is used. This protects the crop from pollutants and ensures that the process is environmentally friendly. Such fuels are economic to use due to the high thermal efficiency of the system.

The thermal fog delivers heat energy to the plantation is by means of heat transfer mechanisms. In particular, the thermal fog can deliver heat energy by direct heat conduction to a surface with which it comes into contact. For instance, it can transfer heat to the ground vegetation, soil, plant trunks, leaves and fruit. Alternatively, it can transfer heat to the surrounding air. The water vapour component on the thermal fog will condense transferring condensation heat at a rate of about 2253 kJ/litre of water being deposited. The resulting condensate will form a water film on the impacted surfaces. The liquid water forming the film can lose further energy of about 418 kJ/litre due to cooling prior to freezing. Some of this energy will also be transferred to the surface upon which the film is deposited. It should be noted that the vapour which remains in the air will transfer the same amount of energy warming the air. Additionally, the water will release energy amounting to about 334.8 kJ/litre water as it forms ice.

It may be appreciated that the heat will be transferred to air over the plantation. In particular, after being ejected hot gas will initially travel upward. It will contact cold air as it rises, transferring heat thereto and losing buoyancy as it does. Accordingly, the hot gases will heat a substantial area over the plantation and will act as a heat barrier.

The fluctuation or duality of the working system either as heat carrier or a heat barrier can be achieved by increasing or decreasing the quantity of water which is used. This can be easily done by adjusting the water pressure in the distribution pipes 32a-d. The pressure can be managed automatically by servo command or alternatively by hand from the tractor cabin by the operator in charge. It means there is a possibility that the whole operation can be monitored, changed and controlled by the sole operator of the unit whilst fighting the frost in the plantation.

## Claims

1. An apparatus (10) for generating a thermal fog, the apparatus (10) comprising:

   - a burner (36) configured to be provided with a fuel source and air;
   - an enclosed conduit configured to receive a combustion gas from the burner (36);
   - a plurality of injectors (70) disposed along the enclosed conduit and configured to inject liquid water into the enclosed conduit to thereby provide a gas comprising water vapour; and
   - an ejector (49) configured to release the gas comprising water vapour as a jet (86) to provide a thermal fog,

   wherein a second, downstream portion of the enclosed conduit is disposed substantially around a first, upstream portion of the enclosed conduit, such that the first, upstream portion and second, downstream portion of the enclosed conduit share a dividing wall,
wherein the first, upstream portion of the enclosed conduit has a cylindrical cross-section and the second, downstream portion of the enclosed conduit comprises an annulus disposed around and on the same longitudinal axis as first, upstream portion of the enclosed conduit, and
wherein the plurality of injectors (70) are disposed along an external surface of the second, downstream portion of the enclosed conduit.

2. An apparatus (10) according to claim 1, wherein the apparatus (10) comprises a first blower configured to feed the combustion gas from the burner into the enclosed conduit.

3. An apparatus (10) according to any one of claims 1 to 2, wherein the plurality of injectors comprise a plurality of spray nozzles (70).

4. An apparatus (10) according to claim 2, wherein the apparatus (10) further comprises:

   - an outlet conduit (44) which extend between the enclosed conduit and the ejector (49);
   - a second blower (46) is disposed on the outlet conduit; and
   - an air inlet (47) comprising a valve and configured to selectively allow ambient air to be drawn into the outlet conduit (44).

5. An apparatus (10) according to any one of claims 1 to 4, wherein the direction of the ejector (49) is adjustable, and/or wherein the apparatus (10) comprises at least two ejectors (49, 50), and at least one ejector (49) is configured to release the gas comprising water vapour as a jet (86) on a first side of the apparatus (10) and at least one ejector (50) is configured to release the gas comprising water vapour as a jet (87) on a second side of the apparatus (10), wherein the second side is substantially opposite to the first side.

6. An apparatus according (10) to any one of claims 1 to 5, wherein the apparatus (10) comprises a valve configured to selectively release a fluid from the enclosed conduit.

7. A vehicle (20) comprising the apparatus (10) as defined in any one of claims 1 to 6.

**Patentansprüche**

1. Vorrichtung (10) zum Erzeugen eines thermischen Nebels, wobei die Vorrichtung (10) Folgendes umfasst:

   - einen Brenner (36), der dazu konfiguriert ist, dass ihm eine Brennstoffquelle und Luft bereitgestellt werden;
   - eine eingeschlossene Leitung, die dazu konfiguriert ist, ein Verbrennungsgas von dem Brenner (36) aufzunehmen;
   - eine Vielzahl von Injektoren (70), die entlang der eingeschlossenen Leitung angeordnet und dazu konfiguriert ist, flüssiges Wasser in die eingeschlossene Leitung zu injizieren, um dadurch ein Wasserdampf umfassendes Gas bereitzustellen; und
   - einen Ejektor (49), der dazu konfiguriert ist, das Wasserdampf umfassende Gas als Strahl (86) freizusetzen, um einen thermischen Nebel bereitzustellen,
   wobei ein zweiter, stromabwärtiger Abschnitt der eingeschlossenen Leitung im Wesentlichen um einen ersten, stromaufwärtigen Abschnitt der eingeschlossenen Leitung herum angeordnet ist, sodass sich der erste, stromaufwärtige Abschnitt und der zweite, stromabwärtige Abschnitt der eingeschlossenen Leitung eine Trennwand teilen,
   wobei der erste, stromaufwärtige Abschnitt der eingeschlossenen Leitung einen zylindrischen Querschnitt aufweist und der zweite, stromabwärtige Abschnitt der eingeschlossenen Leitung einen Ringraum umfasst, der um den ersten, stromaufwärtigen Abschnitt der eingeschlossenen Leitung herum und auf derselben Längsachse wie dieser angeordnet ist, und
   wobei die Vielzahl von Injektoren (70) entlang einer Außenoberfläche des zweiten, stromabwärtigen Abschnitts der eingeschlossenen Leitung angeordnet ist.

2. Vorrichtung (10) nach Anspruch 1, wobei die Vorrichtung (10) ein erstes Gebläse umfasst, das dazu konfiguriert ist, das Verbrennungsgas von dem Brenner in die eingeschlossene Leitung einzuspeisen.

3. Vorrichtung (10) nach einem der Ansprüche 1 bis 2, wobei die Vielzahl von Injektoren eine Vielzahl von Sprühdüsen (70) umfasst.

4. Vorrichtung (10) nach Anspruch 2, wobei die Vorrichtung (10) ferner Folgendes umfasst:

   - eine Auslassleitung (44), die sich zwischen der eingeschlossenen Leitung und dem Ejektor (49) erstrecken;

- ein zweites Gebläse (46) an der Auslassleitung angeordnet ist; und

- einen Lufteinlass (47), der ein Ventil umfasst und dazu konfiguriert ist, selektiv zuzulassen, dass Umgebungsluft in die Auslassleitung (44) gesaugt wird.

5. Vorrichtung (10) nach einem der Ansprüche 1 bis 4, wobei die Richtung des Ejektors (49) einstellbar ist und/oder wobei die Vorrichtung (10) mindestens zwei Ejektoren (49, 50) umfasst und mindestens ein Ejektor (49) dazu konfiguriert ist, das Wasserdampf umfassende Gas auf einer ersten Seite der Vorrichtung (10) als Strahl (86) freizusetzen, und mindestens ein Ejektor (50) dazu konfiguriert ist, das Wasserdampf umfassende Gas auf einer zweiten Seite der Vorrichtung (10) als Strahl (87) freizusetzen, wobei die zweite Seite der ersten Seite im Wesentlichen gegenüberliegt.

6. Vorrichtung nach (10) einem der Ansprüche 1 bis 5, wobei die Vorrichtung (10) ein Ventil umfasst, das dazu konfiguriert ist, selektiv ein Fluid aus der eingeschlossenen Leitung freizusetzen.

7. Fahrzeug (20), umfassend die Vorrichtung (10), wie in einem der Ansprüche 1 bis 6 definiert.

## Revendications

1. Appareil (10) destiné à générer un brouillard thermique, l'appareil (10) comprenant :

- un brûleur (36) conçu pour être doté d'une source de combustible et d'air ;
- un conduit fermé conçu pour recevoir un gaz de combustion en provenance du brûleur (36) ;
- une pluralité d'injecteurs (70) disposés le long du conduit fermé et conçus pour injecter de l'eau liquide dans le conduit fermé pour obtenir ainsi un gaz comprenant de la vapeur d'eau ; et
- un éjecteur (49) conçu pour libérer le gaz comprenant de la vapeur d'eau sous forme de jet (86) afin d'obtenir un brouillard thermique, une seconde partie en aval du conduit fermé étant disposée sensiblement autour d'une première partie en amont du conduit fermé, de sorte que la première partie en amont et la seconde partie en aval du conduit fermé partagent une paroi de séparation, ladite première partie en amont du conduit fermé comportant une section transversale cylindrique et ladite seconde partie en aval du conduit fermé comprenant un anneau disposé autour et sur le même axe longitudinal que la première partie en amont du conduit fermé, et ladite pluralité d'injecteurs (70) étant disposés le long d'une surface externe de la seconde partie en aval du conduit fermé.

2. Appareil (10) selon la revendication 1, ledit appareil (10) comprenant une première soufflante conçue pour alimenter le conduit fermé en gaz de combustion en provenance du brûleur.

3. Appareil (10) selon l'une quelconque des revendications 1 à 2, ladite pluralité d'injecteurs comprenant une pluralité de buses de pulvérisation (70).

4. Appareil (10) selon la revendication 2, ledit appareil (10) comprenant en outre :

- un conduit de sortie (44) qui s'étend entre le conduit fermé et l'éjecteur (49) ;
- une seconde soufflante (46) qui est disposée sur le conduit de sortie ; et
- une entrée d'air (47) comprenant une soupape et conçue pour permettre sélectivement à l'air ambiant d'être aspiré dans la conduite de sortie (44).

5. Appareil (10) selon l'une quelconque des revendications 1 à 4, ladite direction de l'éjecteur (49) étant réglable, et/ou ledit appareil (10) comprenant au moins deux éjecteurs (49, 50), et au moins un éjecteur (49) étant conçu pour libérer le gaz comprenant de la vapeur d'eau sous la forme de jet (86) sur un premier côté de l'appareil (10) et au moins un éjecteur (50) étant conçu pour libérer le gaz comprenant de la vapeur d'eau sous forme de jet (87) sur un second côté de l'appareil (10), ledit second côté étant sensiblement opposé au premier côté.

6. Appareil (10) selon l'une quelconque des revendications 1 à 5, ledit appareil (10) comprenant une soupape conçue pour libérer sélectivement un fluide du conduit fermé.

7. Véhicule (20) comprenant l'appareil (10) selon l'une quelconque des revendications 1 à 6.

# Figure 1

# Figure 2

**Figure 3**

## Figure 4

# Figure 5

**EP 3 886 568 B1**

REFERENCES CITED IN THE DESCRIPTION

**Patent documents cited in the description**

- GB 2387308 A
- US 3788547 A